# EUROPEAN PATENT APPLICATION

(11) **EP 2 136 459 A1**
(43) Date of publication of application: **23.12.2009**
(21) Application number: 08305277.9
(22) Date of filing: 18.06.2008
(51) Int. Cl.: H02M 3/07

(54) **Charge pump circuit**

(71) Applicant: Intégration Dolphin Inc., Laval, QC H7T 1S9 (CA)
(72) Inventor: Gagnon, Yves, Owen Sound, Ontario N4K 5W4 (CA); Renaud, Mathieu, Laval, Québec H7L 6B4 (CA); Belhaouane, Adel, Lasalle, Québec H8R 4C6 (CA); Langlois, Hugues, St-Roch-de-l'Achigan, Québec J0K 3H0 (CA)
(74) Representative: de Beaumont, Michel

(57) **Abstract**

The invention concerns a DC-DC converter comprising: at least one output capacitor (214-220) providing an output voltage; a timing signal generator (212) adapted to generate a plurality of timing signals (CLK1-CLKN) phase-shifted with respect to each other; and a plurality of switched capacitor blocks (204-210) each adapted to receive an input voltage and a respective one of said plurality of timing signals and being arranged to output a current to charge said at least one output capacitor during a time period determined by said respective one of said timing signals.

## Description

### FIELD OF THE INVENTION

The present invention relates to a DC-DC voltage converter, and in particular to a DC-DC voltage converter comprising switched capacitors.

### BACKGROUND TO THE INVENTION

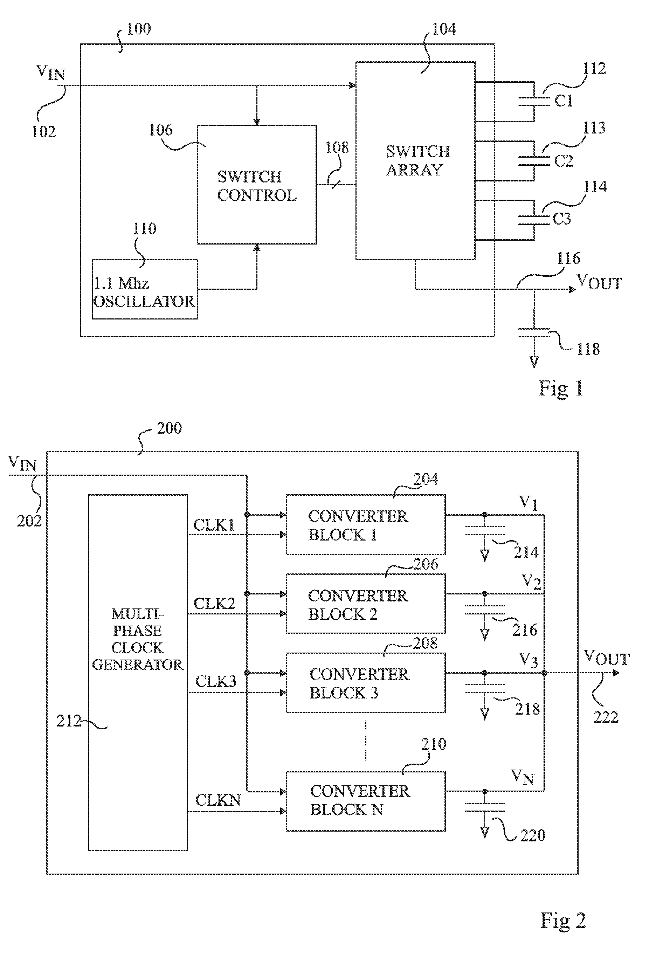

Figure 1 illustrates a DC-DC converter 100 comprising an input node 102, and a switch array 104 comprising switches. The switch array 104 is controlled by a switch control block 106, which provides control signals on lines 108. The switch control block 106 receives a timing signal generated by an oscillator 110, which generates a 1.1 MHz signal. The switch array 104 is coupled to capacitors 112, 113 and 114, which are known as flying capacitors, and are mounted off-chip. The switch array block provides an output voltage on line 116, which is coupled to an output capacitor 118 coupled to ground.

In operation, the input voltage on line 102 is coupled to charge capacitors 112, 113 and/or 114 during a first period determined by the timing signal from switch control block 106, and during a second period, capacitors 112, 113 and/or 114 are coupled to the output node 116, to provide an output voltage. Depending on the timing of a control signals generated by the switch control block 108, the output voltage can be varied. The output capacitor smoothes the output voltage.

A disadvantage with the circuit of Figure 1 is that, to allow a reasonable current to be provided to a load, capacitors 112, 113, 114 and 118 are generally relatively large, making them difficult to integrate on chip 100, and adding to the circuit's cost. There is thus a need for a DC-DC converter having a lower output capacitance for a given load current and/or smaller flying capacitors, such that a complete integration on chip is possible.

### SUMMARY OF THE INVENTION

It is an aim of the embodiments of the present invention to at least partially address one or more needs in the prior art.

According to one aspect of the present invention, there is provided a DC-DC converter comprising at least one output capacitor providing an output voltage; a timing signal generator adapted to generate a plurality of timing signals phase-shifted with respect to each other; and a plurality of switched capacitor blocks each adapted to receive an input voltage and a respective one of the plurality of timing signals and being arranged to output a current to charge the at least one output capacitor during a time period determined by the respective one of the timing signals.

According to an embodiment of the present invention, the timing signal generator is adapted to generate each of the timing signals to have the same frequency, and a different phase-shift with respect to a reference timing signal.

According to another embodiment of the present invention, the timing signal generator is adapted to generate N timing signals each have a phase-shift with respect to the reference timing signal of a multiple of a time tp/N, where tp is the time period of the timing signals.

According to another embodiment of the present invention, at least one of the plurality of switched capacitor blocks comprises a control block arranged to generate control signals for controlling switches of one or more of the switched capacitor blocks based on one or more of the timing signals.

According to another embodiment of the present invention, the DC-DC converter further comprises a feedback control circuit coupled to the plurality of switched capacitor blocks, for controlling the switched capacitor blocks based on an output voltage of the DC-DC converter.

According to another embodiment of the present invention, capacitors of the switched capacitor blocks and the at least one output capacitor are formed on a same chip as the switched capacitor blocks.

According to a further aspect of the present invention, there is provided an integrated circuit comprising the DC-DC converter according to any of the above embodiments.

According to a further aspect of the present invention, there is provided an electronic device comprising the above integrated circuit.

According to a further aspect of the present invention, there is provided a media player comprising the above integrated circuit.

According to a further aspect of the present invention, there is provided a method of converting a first DC voltage level to a second DC voltage level comprising generating a plurality of timing signals phase-shifted with respect to each other; coupling the first DC voltage level to a plurality of capacitors; coupling a first one of the plurality of capacitors to at least one output capacitor during a first time period determined by a first one of the timing signals; and coupling a second one of the plurality of capacitors to the at least one output capacitor during a second period determined by a second one of the timing signals, wherein the at least one output capacitor provides the second DC voltage level.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which:
Figure 1 (described above) illustrates a DC-DC converter comprising a switch array and capacitors mounted off-chip;
Figure 2 illustrates a DC-DC converter according to an embodiment of the present invention;
Figure 3 illustrates a converter block of Figure 2 in more detail according to embodiments of the present invention;
Figure 4 illustrates clock signals generated by a multi-phase clock generator of Figure 2 in more detail;
Figure 5 illustrates a DC-DC converter according to a further embodiment of the present invention; and
Figure 6 illustrates an electrical device comprising a DC-DC converter according to embodiments of the present invention.

### DETAILED DESCRIPTION OF THE EMBODIMENTS OF THE PRESENT INVENTION

Figure 2 illustrates a DC-DC converter 200 for generating an output voltage V_{OUT} based on an input voltage V_{IN}. An input line 202 is provided for receiving the input voltage V_{IN}, which is for example provided by a battery, PSU (power supply unit) or the like. Input line 202 is coupled to a number of converter blocks 204, 206, and 208 and an N^{th} converter block 210, there being N converter blocks in total. While four converter blocks are shown in Figure 2, N could be any number being between two and several hundred. Each of the N converter blocks 204 to 210 also receives a respective timing signal CLK1 to CLKN, provided by a multi-phase clock generator 212.

The N converter blocks 204 to 210 output respective voltage signals V₁ to V_{N}. Furthermore, the outputs from the respective converter blocks 204 to 210 are coupled to respective output capacitors 214, 216, 218 and 220. The combination of the output voltages V₁ to V_{N} provide the output voltage V_{OUT} on the output line 222 of the DC-DC converter.

In operation, the multi-phase clock generator outputs timing signals, for example in the form of square wave clock signals that have timing edges at regular time intervals, but each being phase-shifted with respect to the others. For example, the timing signals each have the same frequency and the phases of the timing signals are offset with respect to each other to be evenly distributed throughout a period of the timing signals. For example, each converter block 204 to 210 receives in turn a timing edge of the respective timing signal, the phase-shift of each timing signal being delayed with respect to a reference timing signal by a different multiple of a time tp/N, where tp is the time period of the timing signals, and N is the total number of converter blocks.

The timing signals for example have frequencies in the range 1MHz to 100MHz. In some embodiments, more than one of the converters could receive the same timing signal having a same phase, however at least two and preferably at least ten different phases are used. For example, between 10 and 100 different phases and respective converter blocks could be provided, or between 20 and 30 different phases and respective converter blocks.

The result is that each of the converter blocks 204 to 210 is activated in turn to charge the respective output capacitors 214 to 220 for a certain duration, during each period of the timing signals. Each of the converter blocks comprises switched capacitors, which are switched based on timing signals generated based on the respective timing signal provided by the multi-phase clock generator 212, to generate a desired output voltage. As will be explained in more detail below, depending on the way the capacitors are switched, the output voltage can be higher or lower than the input voltage, and for example has a gain with respect to the input voltage of anywhere between an eighth of the input voltage and eight times the input voltage, although other gains are possible.

Each of the converters is arranged to convert the input voltage to the same level, in other words applying the same gain factor to the input voltage.

By charging the output capacitors using multiple converter blocks operating out of phase with each other, the capacitance of the output capacitors can be reduced for a given output load when compared to using a single converter and/or a higher load can be driven by a same output capacitance. In particular, when a single converter is used to convert a DC voltage, as an output voltage is only provided during part of a cycle, a relatively large output capacitance is needed in order to store charge to be provided by the load when no output voltage is provided by the converter. On the other hand, by using multiple converters that provide output voltages at different times during the cycle, the output capacitor is charged more often, and therefore does not need to be able to store as much charge to supply the load.

It follows that the overall output capacitance needed for a given load is inversely proportional to the number of converters operating at different phases. In other words, assuming a single converter needs an output capacitance of at least 20 nF to drive a given load, using ten converters operating at ten different phases, the total output capacitance can be reduced by a factor of ten, to just 2 nF. Thus, whereas the output capacitance of the single converter could be provided by ten capacitors coupled in parallel, each with a capacitance of 2 nF, by using ten converters, a single capacitor associated with each of the ten converters can be provided having a capacitance of just 200 pF. Capacitors of this order of magnitude may be integrated on chip, and thus DC-DC converter 200 is for example entirely integrated on chip.

The switched capacitor converter 200 is for example able to provide an output current of greater than 100 mA, and for example between 100 µA and 2 or more amps, when integrated on chip.

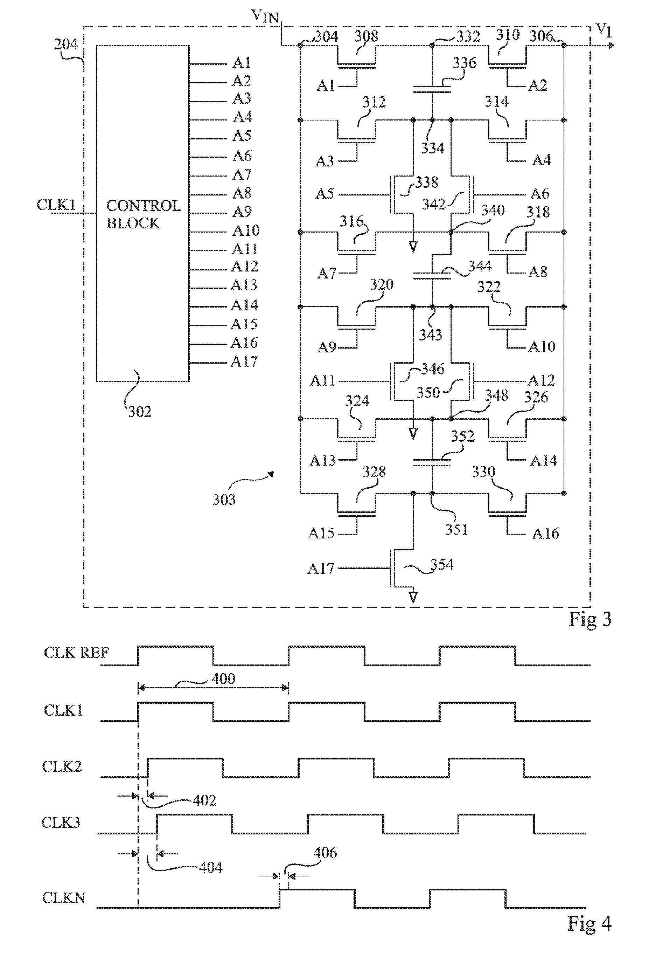

Figure 3 illustrates converter block 204 of Figure 2 in more detail according to one example. Converter blocks 206 to 210 and any further converters could comprise similar circuitry.

Converter 204 comprises a control block 302, which receives the input clock signal CLK1 from the multi-phase clock generator 212 of Figure 2. Control block 302 generates 17 control signals A1 to A17 in this embodiment, for controlling switches of a switched capacitor array 303.

Switched capacitor array 303 receives the input voltage V_{IN}, which is coupled to a node 304, while the output voltage V₁ from converter block 204 is coupled to a node 306 of the switched capacitor array 303. Pairs of switches are coupled in series between nodes 304 and 306. In particular, pairs of transistors 308 and 310, transistors 312 and 314, transistors 316 and 318, transistors 320 and 322, transistors 324 and 326, and transistors 328 and 330 are coupled in series between nodes 304 and 306 via their main current terminals.

A node 332 between transistors 308 and 310 is further coupled to a node 334 between transistors 312 and 314 via a capacitor 336. Node 334 is coupled to a ground reference voltage via a transistor 338, and to a further node 340 between transistors 316 and 318 via a transistor 342. Node 340 is coupled to a node 343 between transistors 320 and 322 via a capacitor 344. Node 343 is furthermore coupled to ground via a transistor 346, and to a node 348 between transistors 324 and 324 via a transistor 350. Node 348 is coupled to a node 351 between transistors 328 and 330 via a capacitor 352. Node 348 is furthermore coupled to a ground reference voltage via a transistor 354. Transistors 308, 310, 312, 314, 338, 342, 316, 318, 320, 322, 346, 350, 324, 326, 328, 330 and 354 receive control signals A1 to A17 respectively.

The switches of the switched capacitor array 303 can be controlled by the control signals A1 to A17 to provide a voltage conversion of the input voltage by any of the following gain ratios: 8, 7, 6, 5, 4, 3, 5/2, 2, 5/3, 3/2, 4/3, 1, 3/4, 2/3, 3/5, 1/2, 2/5, 1/3, 1/4, 1/5, 1/6, 1/7 and 1/8.

For example, to multiply the input voltage by a factor of 1/4, during the first half period of clock CLK1, signals A1, A6, A12 and A16 are high, turning switches 308, 342, 350 and 330 ON, and the other signals are low, thereby turning the other switches OFF. This couples capacitors 336, 344 and 352 in series between input node 304 (V_{IN}) and the output node 306 (V₁). During the second half period of clock CLK1, signals A2, A5, A8, A11, A14 and A17 are high, turning transistors 310, 338, 318, 346, 326 and 354 ON, and the other signals are low, turning the other switches OFF. This couples each of capacitors 336, 344 and 352 in parallel between the output node 306 (V₁) and the ground reference.

Alternatively, to multiply the input voltage V_{IN} by a factor of 4, during the first half period of clock CLK1, signals A2, A6, A12 and A15 are high, turning switches 310, 342, 350 and 328 ON, and the other signals are low, thereby turning the other switches OFF. This couples capacitors 336, 344 and 352 in series between the output node 306 (V₁) and the input node 304 (V_{IN}). During the second half period of clock CLK1, signals A1, A5, A7, A11, A13 and A17 are high, turning transistors 308, 338, 316, 346, 324 and 354 ON, and the other signals are low, turning the other switches OFF. This couples each of capacitors 336, 344 and 352 in parallel between the input node 304 (V_{IN}) and the ground reference.

The control block 302 generates the control signals A1 to A17 based on the required ratio between the output voltage V₁ and the input voltage V_{IN}. As these control signals are generated based on timing signal CLK1, the period of operation of the converter during which one or more of the capacitors 336, 344 and 352 is coupled to the output node 306 will be timed as a function of the timing edges of the timing signal CLK1. For example, CLK1 comprises rising timing edges which trigger control signals to control the transistors of the switched capacitor array to couple input node 304 to one or more of the capacitors 336, 344 and 352, and falling timing edges of CLK1 which trigger control signals to control the transistors to couple one or more of the capacitors 336, 344 and 352 between the input node 304 and the output node 306 and thereby provide the voltage V₁.

Depending on the duration that each of the N converter blocks 204 to 210 is coupled to the output capacitors, there may be overlap between coupling of the converters, meaning that more than one converter may be coupled to the output capacitance at once. In some embodiments, as many as half of the total number of converters could be coupled to the output at once, if for example they are coupled for half a period of the timing signals. This can help to maintain a smooth output voltage.

Figure 4 illustrates the timing signals CLK1 to CLKN according to an example. As illustrated, the timing signals are generated based on a reference clock CLK REF, having rising and falling timing edges and a period 400. Timing signal CLK1 is for example timed based directly on the reference timing signal CLK REF, as illustrated. Each of the other timing signals CLK2 to CLKN is a delayed version of the reference clock signal. In particular, the rising and falling edges of the second timing signal CLK2 are delayed with respect to those of the first timing signal CLK1 by a delay 402. The rising and falling edges of the third clock signal CLK3 are delayed with respect to those of the first signal CLK1 by a delay 404, which is twice the delay 402. The rising and falling edges of the timing signals CLKN on the other hand are delayed by almost a whole period of the reference signal CLK REF, and in particular to a time period 406 before the next rising edge of the reference clock signal CLK REF, time period 406 being equal to delay 402. Given a total of N timing signals, the delays 402 and 406 are for example equal to the clock period 400, divided by N.

The period 400, which is also the period of all of the timing signals, is for example in the range 10 ns to 1 µS. Assuming a period of 120 ns, and that there are 30 timing signals of different phases, the delay 402 of the second timing signal with respect to the first timing signal is for example equal to 4 ns, and the delay of each timing signal CLKn, where n equals 1 to 30, with respect to the reference signal is for example equal to 4 (n-1) ns. Thus the Nth timing signal, in this case the 30th timing signal, has a delay of 116 ns with respect to the reference signal. The delays are for example provided by a buffer logic device or the like.

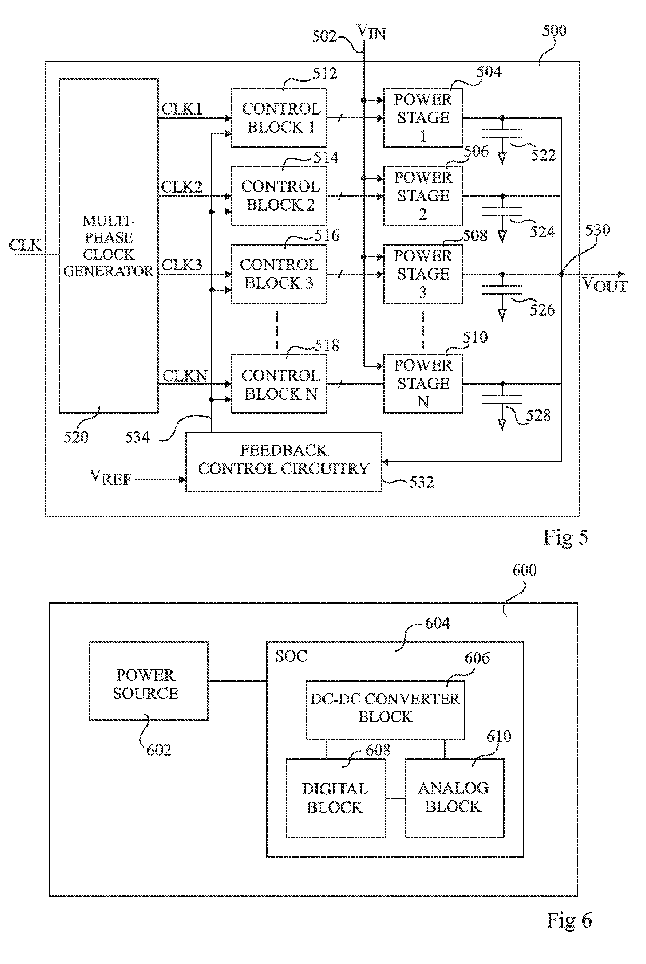

Figure 5 illustrates a DC-DC converter 500 comprisin g an input line 502 for receiving an input voltage V_{IN}, which is coupled to power stages 504, 506 and 508 and to an N^{th} power stage 510. N could be any number. Each of the N power stages is also coupled to respective control block 512, 514, 516 and an Nth control block 518. The N control blocks 512 to 518 each correspond to the control block 302 of Figure 3, while the N power stages 504 to 510 each correspond to the switch capacitor array 303 of Figure 3.

A multi-phase clock generator 520 is provided for generating multi-phase timing signals CLK1 to CLKN provided to the N control blocks 512 to 518 respectively. Output capacitors 522, 524, 526 and 528 are provided at the outputs of the power stages 504 to 510 respectively, the outputs also being coupled to a node 530 which provides the output voltage V_{OUT}.

In this embodiment, a feedback control circuit 532 is coupled to node 530 and is arranged to receive the output voltage V_{OUT}, and based on this output voltage, to generate a control signal for controlling each of the N control blocks 512 to 518. The output of the feedback control circuitry 532 is provided on a line 534, which is coupled to each of the N control blocks 512 to 518. In particular, the feedback signal is for example coupled to control the conductivity of the switches, by adjusting the voltage level at their gate terminals, or by adjusting the ON or OFF times of the switches. The feedback control block 532 also receives a reference voltage V_{REF}, representing the required output voltage level or a multiple thereof, and comprises a comparator for comparing V_{OUT} to V_{REF} and generating an appropriate control voltage.

DC converter 500 is for example entirely integrated on an integrated circuit chip.

Figure 6 illustrates an electronic device 600, which is for example an MP3 player, mobile telephone, portable games console, media player, video recorder, digital camera, personal computer, laptop computer or any other electrical device comprising one or more DC-DC converters.

Device 600 comprises a power source 602, for example a battery or a PSU, coupled to a system on chip (SoC) 604, which comprises a DC-DC converter block 606 comprising one or more DC-DC converters according to one of the embodiments described above. One of the DC-DC converters of the DC-DC converter block 606 is coupled to a digital block 608 and/or another DC-DC converter of the DC-DC converter block 606 is coupled to an analog block 610. The digital block 608 for example comprises digital components that require a DC voltage level different to the voltage provided by the power source 602. The analog block 610 may comprise components that need a supply voltage different to the voltage of the battery 602, and which require in particular a clean voltage level. Low dropout regulators may be provided between the DC-DC converter 606 and the analog block 610 to ensure a clean signal. Alternatively, the signal generated by the DC-DC converter may be clean enough to be provided directly to the analog block, particularly if the DC-DC converter comprises at least ten and preferably between 20 and 30 multiphase converter blocks. While only one DC-DC converter is shown in Figure 6, in practice many DC-DC converters may be provided for supplying the digital block and analog block with one or more voltage levels.

An advantage of embodiments of the DC-DC converter described herein is that, by providing multiple switched capacitor converters, each being coupled in turn to one or more output capacitors at slightly different times, a relatively low output capacitance can be provided at the output of the converters, or a higher load can be driven for same size capacitors. This can advantageously mean that output capacitors that were otherwise too large to be integrated with the DC-DC converter on a chip may be integrated. Furthermore, reducing the output capacitance reduces area and cost of the DC-DC converter.

A further advantage of the embodiments of the DC-DC converter described herein is that one or more of the flying capacitors of the switched capacitor circuit can be reduced in size for a given load current, meaning that they can be integrated on chip, and/or consume less area.

A further advantage of the DC-DC converter described herein is that by providing multiple switched capacitor converter blocks driven by multiple phases, the noise in the DC output voltage can be reduced when compared to using a single switch capacitor converter to provide the output voltage. This is because the output of each converter tends to be a pulse that tails off with time, and by combining a plurality of these signals are regular time intervals a more constant output voltage can be achieved.

Advantageously, the timing edges of each of the timing signals provided to the converters are spaced evenly throughout a cycle, and this helps to ensure a more constant output voltage level.

Whilst a number of specific embodiments have been described, it would be apparent to those skilled in the art that there are many alternatives and variations that can be applied. For example, while the embodiments described in Figures 2 and 5 comprise an output capacitor associated with each of the converter blocks/power stages, it will be apparent to those skilled in the art that the output capacitance can be provided as a number of individual capacitors, or a single large capacitor. The output capacitance could be provided by one or more MIM (metal insulator metal) capacitors, MOM (metal oxide metal) capacitors or other types of capacitors.

It will be apparent to those skilled in the art that the number of phases used, and the number of switch capacitor converts that are provided, will depend on the requirements of the circuit. In some embodiments, it may be sufficient to provide between 2 and 10 converters operating at different phases, and there is no limit to the number of phases and switch capacitor arrays that could be provided, the greater number allowing noise at the output to be improved, but possible using more chip area.

While an example of a switched capacitor converter has been provided in Figure 3, it will be apparent to those skilled in the are that many different circuit designs could be used that allow an input voltage to be increased and/or decreased by various different gains or by a fixed gain. For example, while a circuit has been shown in Figure 3 having 3 flying capacitors and 17 switches, in alternative switched capacitor circuits more flying capacitors and switches could be provided. Alternatively, it will be apparent to those skilled in the art that the switched capacitor converters could have just 2 flying capacitors with 11 switches, or a single flying capacitor and 5 switches. Furthermore, it will be apparent that the transistors described herein, for example in the embodiment of Figure 3, could be MOS (metal oxide semiconductor) transistors, or other types of transistors.

## Claims

1. A DC-DC converter comprising:
at least one output capacitor (214-220; 522-528) providing an output voltage;
a timing signal generator (212, 520) adapted to generate a plurality of timing signals (CLK1-CLKN) phase-shifted with respect to each other; and
a plurality of switched capacitor blocks (204-210; 504-518) each adapted to receive an input voltage and a respective one of said plurality of timing signals and being arranged to output a current to charge said at least one output capacitor during a time period determined by said respective one of said timing signals.

2. The DC-DC converter of claim 1, wherein said timing signal generator is adapted to generate each of said timing signals to have the same frequency, and a different phase-shift with respect to a reference timing signal.

3. The DC-DC converter of claim 2, wherein said timing signal generator is adapted to generate N timing signals each have a phase-shift with respect to said reference timing signal of a multiple of a time tp/N, where tp is the time period of said timing signals.

4. The DC-DC converter of claim 1, wherein at least one of said plurality of switched capacitor blocks comprises a control block (302) arranged to generate control signals for controlling switches of one or more of said switched capacitor blocks based on one or more of said timing signals.

5. The DC-DC converter of claim 1, further comprising a feedback control circuit (532) coupled to said plurality of switched capacitor blocks, for controlling said switched capacitor blocks based on an output voltage of said DC-DC converter.

6. The DC-DC converter of claim 1, wherein capacitors of said switched capacitor blocks and said at least one output capacitor are formed on a same chip as said switched capacitor blocks.

7. An integrated circuit comprising the DC-DC converter of claim 1.

8. An electronic device comprising the integrated circuit of claim 7.

9. A media player comprising the integrated circuit of claim 7.

10. A method of converting a first DC voltage level to a second DC voltage level comprising:
generating a plurality of timing signals phase-shifted with respect to each other;
coupling said first DC voltage level to a plurality of capacitors (336, 344, 352);
coupling a first one of said plurality of capacitors to at least one output capacitor during a first time period determined by a first one of said timing signals; and
coupling a second one of said plurality of capacitors to said at least one output capacitor during a second period determined by a second one of said timing signals, wherein said at least one output capacitor provides said second DC voltage level.
